# EUROPÄISCHE PATENTSCHRIFT

(11) **EP 0 558 994 B1**
(45) Veröffentlichungstag und Bekanntmachung des Hinweises auf die Patenterteilung: **29.11.1995**
(21) Anmeldenummer: 93102424.4
(22) Anmeldetag: 17.02.1993
(51) Int. Cl.: B23Q 11/00

(54) **Handwerkzeugmaschine**
Hand tool
Outil à main

(30) Priorität: 29.02.1992 DE 4206383
(43) Veröffentlichungstag der Anmeldung: 08.09.1993
(73) Patentinhaber: ROBERT BOSCH GMBH, 70442 Stuttgart (DE)
(72) Erfinder: Reibetanz, Wilbert, Dipl.-Ing., W-7022 Leinfelden-Echterdingen 1 (DE); Baumann, Otto, W-7022 Leinfelden-Echterdingen 2 (DE); Müller, Rolf, Dipl.-Ing., W-7022 Leinfelden-Echterdingen (DE); Dutschk, Axel, Dr.-Ing., W-7024 Filderstadt 4 (DE); Brost, Wolfgang, Leinfelden-Echterdingen 2 (DE)

(56) Entgegenhaltungen:
- DE-A- 3 524 036
- DE-C- 2 705 388
- US-A- 1 990 991
- US-A- 2 343 875
- US-A- 2 527 968

## Beschreibung

### Stand der Technik

Die Erfindung geht aus von einer Handwerkzeugmaschine nach dem Oberbegriff des Anspruchs 1. Eine derartige, als Bohrhammer ausgebildete Maschine ist bereits bekannt aus der DE-OS 27 05 388 (= US 4 192 390). Das dort dargestellte Staubgebläse ist gegenüber dem Kühlgebläse für den Antriebsmotor lediglich durch ein Wälzlager getrennt. Dabei kann der Fall auftreten, daß im längeren Betrieb bei zugesetztem Staubsack das Absauggebläse durch das Wälzlager hindurch Staub ins Innere des Bohrhammers fördert. Die zum Schutz des Wälzlagers üblichen Dichtungen erwiesen sich im Langzeitbetrieb als nicht zuverlässig genug.

### Vorteile der Erfindung

Die erfindungsgemäße Handwerkzeugmaschine mit den kennzeichnenden Merkmalen des Anspruchs 1 hat demgegenüber den Vorteil, daß das Innere der Handwerkzeugmaschine gegenüber dem Staubgebläse in allen Betriebszuständen zuverlässig abgedichtet ist. Zur Abdichtung des zwischen einer Zwischenwand und der die Gebläseräder tragenden Welle gebildeten Spaltes wird von dem Kühlluftstrom ein Teilstrom abgezweigt und in Richtung zum Staubgebläse durch den Spalt geleitet. Diese Maßnahme führt selbst bei längeren Arbeiten und zugesetztem Filtersack dazu, daß kein Staub aus dem Staubgebläse ins Innere der Handwerkzeugmaschine dringen kann. Eine mechanische Dichtung kann entfallen.

Durch die in den abhängigen Ansprüchen aufgeführten Maßnahmen sind vorteilhafte Weiterbildungen und Verbesserungen der im Anspruch 1 angegebenen Handwerkzeugmaschine möglich. Besonders vorteilhaft ist es, wenn das Staubgebläse auch gegenüber dem Getrieberaum und damit beidseitig durch eine gerichtete Luftströmung abgedichtet wird. Die Luftströmung wird direkt von dem Staubgebläserad erzeugt und kühlt gleichzeitig den Lagerbock des benachbarten Wellenlagers. Besonders vorteilhaft ist es, die Luftströmung durch rückseitige Schaufeln am Gebläserad des Staubgebläses zu erzeugen. Weitere Vorteile ergeben sich aus der Figurenbeschreibung.

### Zeichnung

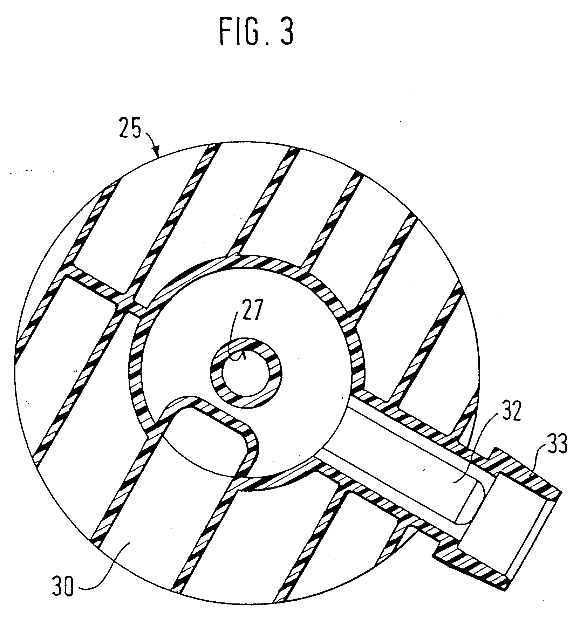

Ein Ausführungsbeispiel der Erfindung ist in der Zeichnung dargestellt und in der nachfolgenden Beschreibung näher erläutert. Figur 1 zeigt eine Gesamtansicht und Figur 2 einen Längsschnitt durch einen Bohrhammer. Figur 3 zeigt einen Querschnitt durch ein Zwischengehäuse.

### Beschreibung des Ausführungsbeispiels

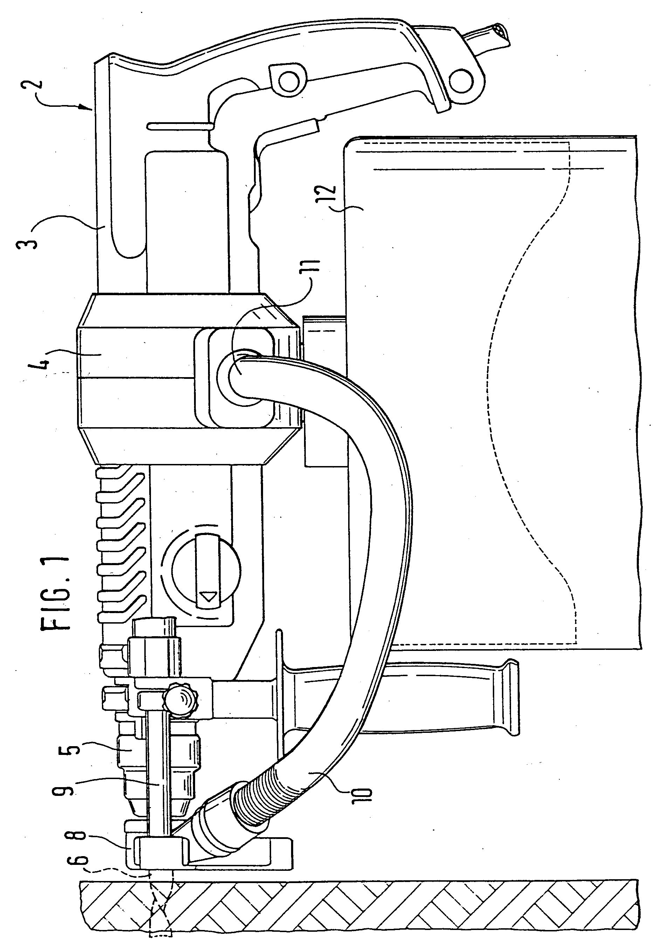

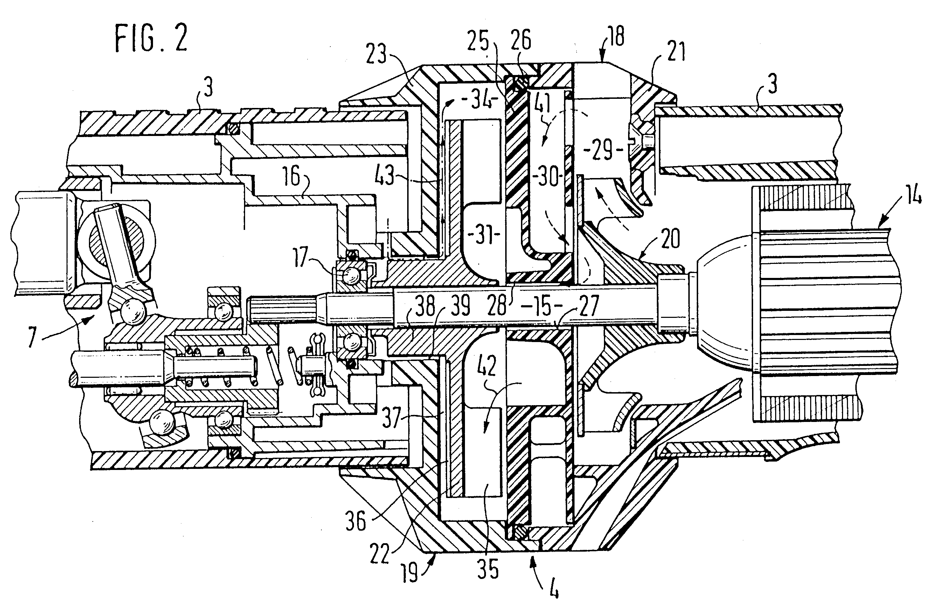

In Figur 1 ist ein Bohrhammer 2 gezeigt, in dessen Gehäuse 3 ein Gebläse 4 integriert ist. Der Bohrhammer 2 weist eine Werkzeugaufnahme 5 auf, in der ein Werkzeug 6 zum Bohren und/oder Schlagen gehalten ist. Im Gehäuse 3 befindet sich ein Schlagwerk 7 (siehe auch Figur 2). Zwischen Werkzeugaufnahme 5 und zu bearbeitender Wand ist ein Saugglocke 8 mittels eines Trägers 9 angebracht. Von der Saugglocke 8 zweigt ein Schlauch 10 ab, der mit einer Ansaugöffnung 11 des Gebläses 4 verbunden ist. Das angesaugte Material wird in einem filternden Staubsack 12 gesammelt.

In Figur 2 ist ein im Gehäuse 3 gelagerter Motor 14 mit Welle 15 gezeigt. Das Ende der Welle 15 ist verzahnt und dient zum Antrieb des Schlagwerks 7 sowie zum Drehantrieb des Werkzeugs 6. Die Welle 15 ist in einem Lagerbock 16 mittels eines Wälzlagers 17 gelagert. Infolge der Lagerreibung erwärmt sich auch der Lagerbock 16 erheblich.

Das Gebläse 4 ist zweiteilig und besteht aus einem Kühlgebläse 18 und einem Staubgebläse 19. Das Kühlgebläse 18 ist dem Motor 14 benachbart angeordnet und weist ein Kühlgebläserad 20 auf, das auf der Welle 15 befestigt ist. Das Kühlgebläserad 20 ist umgeben von einem Kühlgehäuse 21, das sich dicht an das Gehäuse 3 des Bohrhammers anschließt. An das Kühlgebläse 18 grenzt das Staubgebläse 19 mit seinem Sauggebläserad 22 an, das ebenfalls auf der Welle 15 befestigt ist. Das Sauggebläserad 22 ist von einem Gebläsegehäuse 23 umgeben, das einerseits dicht an das Gehäuse 3 des Bohrhammers und andererseits an das Kühlgehäuse 21 anschließt. Die beiden Gebläse 18, 19 sind durch eine Zwischenwand 25 voneinander getrennt. Die Zwischenwand 25 ist im Ausführungsbeispiel an ihrem Umfang von dem Gebläsegehäuse 23 gehalten und mittels eines Dichtrings 26 sowohl gegenüber dem Gebläsegehäuse als auch gegenüber dem Kühlgehäuse 21 abgedichtet. Die Zwischenwand 25 weist eine zentrale Bohrung 27 auf, die unter Bildung eines Ringspalts 28 von der Welle 15 durchdrungen ist. Innerhalb der Zwischenwand 25 ist vom Druckraum 29 des Kühlgebläses 18 radial nach innen zur Welle 15 hin ein Kanal 30 gebildet. In Umfangsrichtung versetzt ist in der Zwischenwand 25 ein ebenfalls sich radial erstreckender Saugkanal 32 gebildet, der außen einen Stutzen 33 zum Anschluß des Schlauches 10 aufweist und innen nahe der Welle 15 in den Saugraum 31 des Staubgebläses 19 mündet.

Das Sauggebläserad 22 trägt vorderseitig Hauptschaufeln 35 sowie rückseitige Schaufeln 36, die jeweils Luft in den Druckraum 34 fördern. Sie sind in axialer Richtung sehr kurz ausgebildet, z. B. 2 mm hoch. Zwischen den Schaufeln 36 und dem Staubgebläsegehäuse 23 verbeibt ein Luftspalt 37 von ca. 0,3 bis 1 mm. Dieser Luftspalt 37 darf nicht zu groß gewählt werden, da sonst unerwünschte Rückströmungen staubbeladener Luft auftreten können. Im Ausführungsbeispiel weist das Sauggebläserad 22 eine axial zum Staubgebläsegehäuse 23 hin verlängerte Nabe 38 auf, die auf die Welle 15 aufgepreßt ist. Zwischen der Nabe 38 und dem Staubgebläsegehäuse 23 ist ein ringförmiger Spalt 39 von ca. 0,5 bis 1,5 mm gebildet. Dieser Spalt 39 könnte auch direkt zwischen der Welle 15 und dem Gehäuse 23 angeordnet sein.

Der Ringspalt 28 und der Spalt 39 werden durch gerichtete Luftströme abgedichtet. Vom Druckraum 29 des Kühlgebläses 18 wird ein Teilstrom 41 durch den Kanal 30 hindurch abgezweigt und durch den Ringspalt 28 geführt. Von dort gelangt dieser Teilstrom 41 in den Saugraum 31 des Staubgebläses und vereinigt sich dort mit dem staubbeladenen Luftstrom 42 aus dem Schlauch 10. Infolge des abluftseitigen Überdrucks des Kühlgebläses wird der Teilstrom 41 auch dann aufrecht erhalten, wenn bei zugesetztem Staubsack 12 der Abluftstrom des Staubgebläses 19 weitgehend blockiert ist.

Der Spalt 39 wird durch einen von den rückseitigen Schaufeln 36 erzeugten Reinluftstrom 43 abgedichtet. Dieser wird aus dem Gehäuse 3 des Bohrhammers angesaugt und streicht an dem Lagerbock 16 vorbei. Dabei nimmt der Reinluftstrom 43 außerdem noch die Reibungswärme des Wälzlagers 17 sowie teilweise die des Schlagwerks 7 auf. Der Reinluftstrom 43 vereinigt sich im Druckraum 34 des Staubgebläses 19 mit der komprimierten staubbeladenen Luft aus dem Schlauch 10. Um in dem Spalt 39 bei zugesetztem Staubsack 12 eine Strömungsumkehr zu verhindern, sind die rückseitigen Schaufeln 36 und die Spalte 37 und 39 so ausgelegt, daß der Reinluftstrom 43 im Druckraum 34 des Staubgebläses 19 etwa den gleichen oder einen etwas höheren Druck aufweist als der von den Hauptschaufeln 35 erzeugte Staubluftstrom 42.

## Patentansprüche

1. Materialabtragende elektrische Handwerkzeugmaschine, insbesondere Bohrhammer, in der ein Gebläse (4), bestehend aus einem Kühlgebläse (18) und einem Staubgebläse (19) untergebracht ist, deren Gebläseräder (20, 22) auf einer gemeinsamen Welle (15) sitzen, wobei das Kühlgebläse (18) von dem Staubgebläse (19) durch eine Zwischenwand (25) getrennt ist, welche eine Bohrung (27) zum Durchtritt der Welle (15) aufweist, dadurch gekennzeichnet, daß kühlgebläseseitig Mittel vorgesehen sind, die so ausgebildet sind, daß von dem austretenden Luftstrom des Kühlgebläses (18) ein Teilstrom (41) abgezweigt und durch die Bohrung (27) in den Saugraum (31) des Staubgebläses (19) geleitet wird.

2. Handwerkzeugmaschine nach Anspruch 1, dadurch gekennzeichnet, daß zur Abzweigung des Teilstroms (41) in der Zwischenwand (25) ein Kanal (30) ausgebildet ist, der sich vom radial äußeren Bereich des Kühlgebläserades (20) zu der Bohrung (27) hin erstreckt.

3. Handwerkzeugmaschine nach Anspruch 1 oder 2, dadurch gekennzeichnet, daß der Abluftstrom des Staubgebläses (19) in einen am Gehäuse (3) der Maschine angebrachten als Filtersack dienenden Staubsack (12) geleitet wird.

4. Als Bohrhammer ausgebildete Handwerkzeugmaschine nach einem der vorhergehenden Ansprüche, dadurch gekennzeichnet, daß Kühl- (18) und Staubgebläse (19) im Gehäuse (3) des Bohrhammers zwischen Motor (14) und Schlagwerk (7) angeordnet sind.

5. Handwerkzeugmaschine nach einem der vorhergehenden Ansprüche, dadurch gekennzeichnet, daß zwischen dem Staubgebläserad (22) des Staubgebläses (19) und dem Staubgebläsegehäuse (23) ein Spalt (39) gebildet ist, durch den ein Reinluftstrom (43) von dem Staubgebläserad (22) in den Druckraum (34) des Staubgebläses (19) gesaugt wird.

6. Handwerkzeugmaschine nach Anspruch 5, dadurch gekennzeichnet, daß das Staubgebläserad (22) zur Erzeugung des Reinluftstroms (43) durch den Spalt (39) rückseitige Schaufeln (36) aufweist.

7. Handwerkzeugmaschine nach einem der vorhergehenden Ansprüche 5 oder 6, dadurch gekennzeichnet, daß der durch den Spalt (39) eintretende Reinluftstrom (43) an einem Lagerbock (16) für ein Lager (17) der Welle (15) vorbei geführt ist.

8. Handwerkzeugmaschine nach einem der vorhergehenden Ansprüche, dadurch gekennzeichnet, daß das Gehäuse (23) des Staubgebläses (19) gegenüber den anderen Gehäuseteilen (21, 25) der Maschine mittels Dichtringen (26) abgedichtet ist.

9. Handwerkzeugmaschine nach einem der vorhergehenden Ansprüche, dadurch gekennzeichnet, daß der Druck des dichtenden Reinluftstroms (43) im Druckraum (34) des Staubgebläses (19) etwa dem Druck des von den Hauptschaufeln (35) erzeugten Staubluftstroms (42) entspricht.

## Claims

1. Material-removing electrical hand-held power tool, particularly a hammer drill, in which a fan (4) consisting of a cooling fan (18) and a dust fan (19) is housed, whose fan wheels (20, 22) are mounted on a common shaft (15), is housed, the cooling fan (18) being separated from the dust fan (19) by a partition (25) which has a bore (27) for the passage of the shaft (15), characterized in that means are provided on the cooling fan side which are designed such that a partial current (41) is branched off from the outgoing air current of the cooling fan (18) and is passed through the bore (27) into the suction chamber (31) of the dust fan (19).

2. Hand-held power tool according to Claim 1, characterized in that for the purpose of branching off the partial current (41) there is provided in the partition (25) a duct (30) which extends from the radially outer region of the cooling fan wheel (20) to the bore (27).

3. Hand-held power tool according to Claim 1 or 2, characterized in that the outgoing air current of the dust fan (19) is passed into a dust bag (12) attached to the casing (3) of the tool and serving as a filter bag.

4. Hand-held power tool in the form of a hammer drill, according to one of the preceding claims, characterized in that the cooling fan (18) and dust fan (19) are arranged in the casing (3) of the hammer drill between the motor (14) and the percussion mechanism (7).

5. Hand-held power tool according to one of the preceding claims, characterized in that between the dust fan wheel (22) of the dust fan (19) and the dust fan casing (23) a gap (39) is formed, through which a current of clean air (43) is sucked by the dust fan wheel (22) into the pressure chamber (34) of the dust fan (19).

6. Hand-held power tool according to Claim 5, characterized in that for the purpose of producing the current of clean air (43) through the gap (39) the dust fan wheel (22) has blades (36) on its rear side.

7. Hand-held power tool according to either of preceding claims 5 and 6, characterized in that the current of clean air (43) entering through the gap (39) is guided past a bearing support (16) for a bearing (17) of the shaft (15).

8. Hand-held power tool according to one of the preceding claims, characterized in that the casing (23) of the dust fan (19) is sealed in relation to the other casing parts (21, 25) of the tool by means of sealing rings (26).

9. Hand-held power tool according to one of the preceding claims, characterized in that the pressure of the sealing current of clean air (43) in the pressure chamber (34) of the dust fan (19) corresponds approximately to the pressure of the current of dust-laden air (42) produced by the main blades (35).

## Revendications

1. Outil électrique à main pour l'enlèvement de matériaux, notamment marteau perforateur, dans lequel est logé un ventilateur (4) constitué d'un ventilateur de refroidissement (18) et d'un ventilateur de poussière (19) dont les roues de ventilation (20, 22) sont placées sur un arbre commun (15), tandis que le ventilateur de refroidissement (18) est séparé du ventilateur de poussière (19) par une paroi intermédiaire (25) qui comporte un alésage (27) pour le passage de l'arbre (15), outil à main caractérisé en ce que, du côté du ventilateur de refroidissement sont prévus des moyens réalisés de façon qu'à partir du courant d'air sortant du ventilateur de refroidissement (18), un courant partiel (41) soit dérivé et soit guidé, à travers l'alésage (27) dans la chambre d'aspiration (31) du ventilateur de poussière (19).

2. Outil à main selon la revendication 1, caractérisé en ce que pour la dérivation du courant partiel (41), un canal (30) est ménagé dans la paroi intermédiaire (25), ce canal s'étendant de la zone radiale externe de la roue (20) du ventilateur de refroidissement, à l'alésage (27).

3. Outil à main selon la revendication 1 ou la revendication 2, caractérisé en ce que le courant d'air sortant du ventilateur de poussière (19) est guidé dans un sac à poussière (12) mis en place sur le carter (3) de la machine et jouant le rôle de sac filtrant.

4. Outil à main réalisé sous la forme d'un marteau perforateur, selon l'une des précédentes revendications, caractérisé en ce que le ventilateur de refroidissement (18) et le ventilateur de poussière (19) sont disposés dans le carter (3) entre le moteur (14) et le mécanisme de percussion (7).

5. Outil à main selon l'une des précédentes revendications, caractérisé en ce qu'entre la roue (22) du ventilateur de poussière (19) et le carter (23) du ventilateur de poussière, est ménagée une fente (39) à travers laquelle un courant d'air pur (43) est aspiré dans la chambre de pression (34) du ventilateur de poussière (19) par la roue (22) du ventilateur de poussière.

6. Outil à main selon la revendication 5, caractérisé en ce que, pour produire le courant d'air pur (43) à travers la fente (39), la roue (22) du ventilateur de poussière comporte des ailettes (36)du côté arrière.

7. Outil à main selon l'une des précédentes revendications 5 ou 6, caractérisé en ce que le courant d'air pur (43) entrant à travers la fente (39), est guidé le long d'un appui (16) pour un palier (17) de l'arbre (15).

8. Outil à main selon l'une des précédentes revendications, caractérisé en ce que le carter (23) du ventilateur de poussière (19) est étanché vis-à-vis des autres parties de carter (21, 25) de la machine au moyen de joints d'étanchéité (26).

9. Outil à main selon l'une des précédentes revendications, caractérisé en ce que la pression du courant d'air pur étanchant (43) dans la chambre de pression (34) du ventilateur de poussière (19), correspond à peu près à la pression du courant d'air (42), chargé de poussière, produit par les ailettes principales (35).
